# DEMANDE DE BREVET EUROPEEN

(11) **EP 0 985 438 A1**
(43) Date de publication de la demande: **15.03.2000**
(21) Numéro de dépôt: 98500254.2
(22) Date de dépôt: 24.11.1998
(51) Int. Cl.: B01D 37/03, B23H 7/36

(54) **Systeme de filtrage de liquides en machines-outils**

(30) Priorité: 15.06.1998 ES 9801249
(71) Demandeur: Ona Electro-Erosion, S.A., 48200 Durango (Vizcaya) (ES)
(72) Inventeur: Maidagan Larrumbide, Javier, 48200 Durango (Vizcaya) (ES)
(74) Mandataire: Urizar Barandiaran, Miguel Angel

(57) **Abrégé**

Système de filtrage de liquides sur machines-outils, de ceux qu'on utilise en circuit de recyclage, un réservoir de travail, un réservoir de liquide sale, un filtre et un réservoir de liquide propre dans lequel on utilise comme liquide de l'eau à très faible conductivité, en rajoutant au circuit de recyclage d'eau de faible conductivité au moins un floculant de l'oxyde ferrique à base de polymère polyélectrolyte.

Application en machines-outils.

## Description

En machines-outils sur lesquelles il y a enlèvement de matière, le liquide employé pour refroidir et nettoyer la zone de travail, par exemple, de l'eau du réseau normal de distribution, se trouve polluée par les copeaux de la propre matière travaillée.

Dans le but de ne pas gâcher et gaspiller le liquide/eau utilisée, on dispose d'un système de filtrage dans lequel on retient le polluant, par exemple, lors de travaux d'électroérosion, les copeaux de type sphérique qui se produisent au moment du fouettement du courant électrique sur la piece a travailler.

Dans le liquide/eau, le polluant, normalement les copeaux de matière travaillée, se dissout partiellement sans créer de problèmes au filtrage.

Quand les méthodes de travail conseillent d'employer de l'eau à faible conductivité, (γ) : γ ≤ 20 us/cm, on a vérifié que l'eau dans le circuit travail/filtrage devient trouble, de couleur rougeâtre, ce qui fait suspecter la présence d'un nouveau polluant qui crée des problèmes de travail, mais ne peut être filtré ni sédimenté par les systèmes conventionnels employés sur les machines-outils.

Le demandeur a vérifié que le nouveau polluant est l'oxyde ferrique à comportement colloïdal et a résolu le problème en rajoutant au circuit de filtrage un composé floculant pour l'oxyde ferrique tel qu'un polymère polyélectrolyte floculant.

Pour mieux comprendre l'objet de la présente invention, on représente sur les plans une forme préférentielle de réalisation pratique, susceptible de changements accessoires qui n'en détournent guère le fondement.

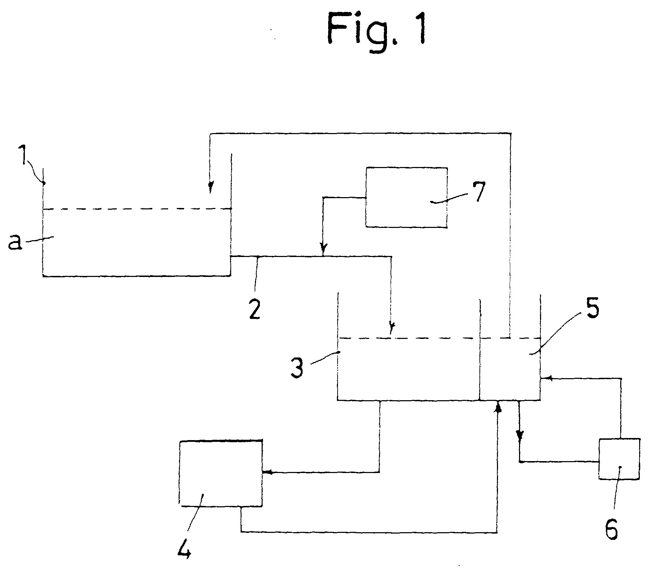

La figure 1 est une représentation schématique d'une réalisation pratique du système faisant l'objet de l'invention.

On trouvera décrit ci-après un exemple de réalisation pratique, non limitative, de la présente invention.

Un réservoir (1) de travail sur lequel se produit le travail de la machine-outil sur la pièce à travailler sert de conteneur pour l'eau (a) utilisée lors dudit travail qui se trouve polluée par des particules provenant de la propre fonction-travail, par exemple lors du fraisage, du dégrossissage, de l'érosion, du meulage, etc.

Les pièces à travailler habituellement sont dans la plupart des cas faites de composés de fer (Fe) comme l'acier, de là que l'un des principaux pollueurs de l'eau ou liquide sale qui sort par le conduit (2) et qui rend le récipient de liquide sale (3) est le fer.

Du récipient de liquide sale (3) on passe à un filtre (4) à partir duquel on alimente un réservoir de liquide propre (5) et au réservoir de travail (1) lui-même (le tout expliqué de manière simplifiée).

Dans nombre de processus de travail, il convient de l'effectuer à l'aide d'une eau qui soit d'une conductivité (γ) en dessous de la normale, par exemple γ ≤ 60 us/cm comme dans les processus d'électroérosion.

Pour parvenir à ladite faible conductivité, le demandeur dispose en circuit fermé par rapport au réservoir de liquide propre (5) d'un réservoir (6) de résines d'échange ionique à lit mixte, avec des résines très cationiques et des résines très anioniques, et approximativement dans la même proportion.

Parfois il convient de désioniser l'eau jusqu'à obtenir des valeurs de conductivité (γ) proches de : γ ≅ 10 us/cm, par exemple dans des processus d'électroérosion par fil en immersion. Dans ces processus avec de l'eau à très faible conductivité, on observe que l'introduction dans le système de filtrage du dépôt de résines (6) parvient à son objectif d'obtenir une faible conductivité mais le liquide qui se recycle à partir du réservoir de travail (1) → réservoir de liquide sale (3) → filtre (4) → réservoir de liquide propre (5) demeure continuellement pollué par un nouveau produit qui donne au liquide une couleur rougeâtre et ayant des propriétés préjudiciables au travail.

Le problème ayant été étudié, le demandeur parvient à la conclusion que l'agent causal de la nouvelle pollution est le fer à l'état ferrique.

Quand on travaille avec de l'eau à une conductivité (γ) pas très faible, par exemple, γ > 40 us/cm les concentrations résiduelles d'autres ions de Ca⁺⁺, Na⁺, Mg⁺⁺, etc. permettent la dissolution du fer des copeaux provenant de la pièce a travailler en le transformant en ion ferreux Fe⁺⁺ mais empêchent qu'il se dissolve à des niveaux de saturation, et par conséquent, l'eau en passant par le filtre (4) se retrouve complètement transparente.

Si l'eau utilisée dans le processus de travail est, ainsi qu'on l'a déjà indiqué, à très faible conductivité (γ) de : γ ≤ 30 us/cm, on observe que le fer se dissout jusqu'à des niveaux de saturation en passant de ion ferreux à ion ferrique : Fe⁺⁺ → Fe⁺⁺⁺ qui s'oxyde en donnant de l'oxyde ferrique : Fe₂0₃, qui a une couleur rougeâtre et que le filtre (4) utilisé ne parvient pas à filtrer, pas plus que le système en général ne parvient à le sédimenter, de là qu'il reste dans le circuit.

Il semble que dans ces circonstances le Fe₂ 0₃ possède des propriétés de colloïde.

Une fois vérifié la cause de pollution (Fe₂ 0₃) il est procédé à introduire dans le circuit, à hauteur du conduit (2) de sortie d'eau sale vers le réservoir d'eau sale (3) un polymère (ou mélange des deux) polyélectrolyte floculant (7).

Le polyélectrolyte floculant (7) peut compacter le polluant (Fe₂ 0₃) auquel cas on utiliserait un polyélectrolyte non ionique, ou, si on veut, qui peut déstabiliser électriquement la superficie des particules polluantes en parvenant à neutraliser la charge électrique des particules à comportement colloïdal d'oxyde ferrique (Fe₂ 0₃), ce qui fait que ces derniers se rejoignent entre eux et forment des flocules qui peuvent être filtrés et sédimentés, auquel cas on utiliserait un polyélectrolyte ionique.

Dans le but de maintenir la faible conductivité de l'eau, le polyélectrolyte à utiliser doit être non ionique ou très légèrement ionique.

Le polyélectrolyte peut être un floculant organique à base d'un ou plusieurs des composants suivants : polyacrylamide, polyacrylates, copolymères d'acrylamide et acide acrylique en granules ou solution qui donne lieu à la déstabilisation électrique et l'enchaînement de nombreuses particules individuelles aboutissant à des flocules.

Les meilleurs résultats ont été obtenus avec de l'eau à conductivité (γ = 12 us/cm ÷ 25 us/cm) utilisant un polyacrylamide ayant une masse moléculaire de neuf millions en solution à 0'08% en poids.

## Revendications

1. Système de filtrage de liquides en machines-outils, de celles utilisant en circuit de recyclage un réservoir de travail, un réservoir de liquide sale, un filtre et un réservoir de liquide propre, se caractérisant en ce qu'il utilise comme liquide de l'eau à très faible conductivité, en rajoutant dans le circuit de recyclage à l'eau de faible conductivité au moins un floculant de l'oxyde ferrique.

2. Système de filtrage de liquides sur machines-outils, selon revendication antérieure, se caractérisant en ce que le floculant de l'oxyde ferrique est un polymère polyélectrolyte.

3. Système de filtrage de liquides sur machines-outils, selon revendication Deux, se caractérisant en ce que le polymère polélectrolyte floculant se rajoute au réservoir de liquide sale.

4. Système de filtrage de liquides sur machines-outils, selon revendication Un, se caractérisant en ce qu'on dispose, en circuit fermé par rapport au réservoir de liquide propre, d'un dépôt de résine à échange ionique à lit mixte avec des résines très cationiques et des résines très anioniques.

5. Système de filtrage de liquides sur machines-outils, selon revendication Deux, se caractérisant en ce que le polyélectrolyte est non ionique ou très légèrement ionique.
